# EUROPEAN PATENT APPLICATION

(11) **EP 4 741 186 A1**
(43) Date of publication of application: **13.05.2026**
(21) Application number: 24861743.3
(22) Date of filing: 02.08.2024
(51) Int. Cl.: B60H 1/00

(54) **THERMAL MANAGEMENT SYSTEM FOR VEHICLE, AND METHOD**

(30) Priority: 07.09.2023 CN 202311151674
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: WANG, Jian, Ningbo, Zhejiang 315899 (CN); XIA, Songyong, Ningbo, Zhejiang 315899 (CN); HU, Lei, Ningbo, Zhejiang 315899 (CN); XU, Jian, Ningbo, Zhejiang 315899 (CN); DAI, Lihui, Ningbo, Zhejiang 315899 (CN)
(74) Representative: Michalski Hüttermann & Partner Patentanwälte mbB
(86) International application number: PCT/CN2024/109571
(87) International publication number: WO 2025/050898

(57) **Abstract**

A thermal management system for a vehicle, and a method. The thermal management system comprises: an air conditioning device (10), comprising an air conditioning main unit (101), a compressor (102), and a condenser (103) connected in sequence; and a heat exchange device (20), one end thereof being connected to a refrigerant input end of the compressor (102), and the other end thereof being connected between the condenser (103) and the air conditioning main unit (101). When the condenser (103) operates, a refrigeration circuit is formed among the air conditioning main unit (101), the compressor (102), and the condenser (103); and when the condenser (103) does not operate, a waste heat recovery circuit is formed among the air conditioning main unit (101), the compressor (102), the condenser (103), and the heat exchange device (20).

## Description

### CROSS-REFERENCE TO RELATED APPLICATIONS

This application claims the benefit of priority to Chinese Application No. 202311151674.7, filed to the China National Intellectual Property Administration on September 07, 2023, the entire contents of which are incorporated herein by reference.

### TECHNICAL FIELD

Embodiments of the present application relate to, but are not limited to, the field of vehicle air conditioning technology, and in particular, relate to, but are not limited to, a thermal management system and method for a vehicle.

### BACKGROUND

A vehicle air conditioning device, referred to as a vehicle air conditioner, is used to adjust and control the temperature, humidity, air cleanliness, and air flow within the vehicle compartment to an optimal state, providing a comfortable riding environment for occupants and reducing travel fatigue; simultaneously, the vehicle air conditioner creates favorable working conditions for the driver, playing a significant role in ensuring safe driving. The vehicle air conditioner generally includes a refrigeration device, a heating device, and a ventilation device.

### SUMMARY

The present application provides a thermal management system for a vehicle, including: an air conditioning device including a heating-ventilation and air conditioning host, a compressor, and a condenser connected in sequence; and a heat exchange device, an end of the heat exchange device being connected to a refrigerant input end of the compressor, and another end of the heat exchange device being connected between the condenser and the heating-ventilation and air conditioning host; where, when the condenser operates, the heating-ventilation and air conditioning host, the compressor, and the condenser form a refrigeration circuit; when the condenser does not operate, the heating-ventilation and air conditioning host, the compressor, the condenser, and the heat exchange device form a waste heat recovery circuit, and the refrigerant is caused to flow through the heating-ventilation and air conditioning host to release heat, then flow into the heat exchange device before returning to the compressor.

In an embodiment of the present application, a first solenoid valve is connected between the heating-ventilation and air conditioning host and the compressor, a first electronic expansion valve and a second solenoid valve are connected in sequence between the heating-ventilation and air conditioning host and the condenser, an end of a third electronic expansion valve is connected between the heating-ventilation and air conditioning host and the first solenoid valve, and another end of the third electronic expansion valve is connected between the condenser and the second solenoid valve.

In an embodiment of the present application, the heat exchange device includes: a chiller, an end of the chiller being connected to the refrigerant input end of the compressor; and a second electronic expansion valve, an end of the second electronic expansion valve being connected to another end of the chiller, and another end of the second electronic expansion valve being connected between the first electronic expansion valve and the second solenoid valve; where, when the first solenoid valve and the second solenoid valve are closed, the third electronic expansion valve is throttling, the first electronic expansion valve is fully open, and the second electronic expansion valve is throttling, the waste heat recovery circuit is formed, and the refrigerant is caused to absorb heat through the chiller.

In an embodiment of the present application, the thermal management system further includes a controller electrically connected to the first solenoid valve, the second solenoid valve, the first electronic expansion valve, the second electronic expansion valve, the third electronic expansion valve, and the heat exchange device, respectively, and configured to: control the first solenoid valve and the second solenoid valve to open, control the second electronic expansion valve and the third electronic expansion valve to close, and control the first electronic expansion valve to throttle when forming the refrigeration circuit; and control the first solenoid valve and the second solenoid valve to close, control the third electronic expansion valve to throttle, control the first electronic expansion valve to fully open, and control the second electronic expansion valve to throttle when forming the waste heat recovery circuit.

In an embodiment of the present application, the controller includes: a cabin signal acquisition unit, configured to acquire a circuit control signal indicating that the cabin of the vehicle is in an unoccupied state; a heat dissipation control unit, configured to control the condenser to stop heat dissipation upon acquiring the circuit control signal; and a circuit control unit, configured to control switching between the refrigeration circuit and the waste heat recovery circuit.

In an embodiment of the present application, the circuit control unit includes: a temperature monitor, configured to acquire a temperature control signal indicating that a temperature difference between the temperature of the refrigerant about to enter the heating-ventilation and air conditioning host and the temperature inside the cabin of the vehicle has not reached a predetermined temperature difference; and a pressure controller, configured to control a throttling pressure of the third electronic expansion valve on the refrigerant according to the temperature control signal until the temperature difference reaches the predetermined temperature difference.

In an embodiment of the present application, a range of the predetermined temperature difference is 10-20°C.

In an embodiment of the present application, the condenser includes a water-cooled condenser or an air-cooled condenser.

In an embodiment of the present application, the heating-ventilation and air conditioning host includes: an evaporator and a blower, where the blower is mounted corresponding to the evaporator to control the blower to blow air towards the evaporator when the waste heat recovery circuit is formed.

In an embodiment of the present application, when the waste heat recovery circuit is formed, the blower blows air towards the evaporator for drying when the temperature of the refrigerant flowing through the heating-ventilation and air conditioning host is 10-20°C higher than the temperature inside the cabin of the vehicle.

The present application further provides a thermal management method for a vehicle, applied to the waste heat recovery thermal management system described above, the method including:
acquiring a waste heat recovery control signal when a refrigeration circuit of the vehicle is closed and a circuit control signal indicating that the cabin of the vehicle is in an unoccupied state;
according to the waste heat recovery control signal and the circuit control signal, controlling a condenser in the thermal management system to stop, controlling a first solenoid valve and a second solenoid valve in the thermal management system to close, controlling a third electronic expansion valve in the thermal management system to throttle, controlling a first electronic expansion valve in the thermal management system to fully open, and controlling a second electronic expansion valve in the thermal management system to throttle, to form a waste heat recovery circuit;
monitoring temperature data of a to-be-cooled device, determining whether the temperature data of the to-be-cooled device exceeds a preset requirement; if the temperature data of the to-be-cooled device exceeds the preset requirement, controlling refrigerant in the waste heat recovery circuit to pass through the second electronic expansion valve throttling, causing the refrigerant flowing through the heat exchange device to absorb heat from a cooling device of the to-be-cooled device, and causing the refrigerant to return to the compressor; if the temperature data of the to-be-cooled device does not exceed the preset requirement, controlling the refrigerant to return directly to the compressor after passing through the second electronic expansion valve throttling.

In an embodiment of the present application, determining whether the temperature data of the to-be-cooled device exceeds the preset requirement includes: determining whether a circulating water temperature of the to-be-cooled device is greater than a preset temperature, to control whether the refrigerant absorbs heat from the circulating water; and determining whether the circulating water temperature after the circulating water being heat-absorbed by the refrigerant meets a water inlet requirement of the to-be-cooled device.

In an embodiment of the present application, determining whether the circulating water temperature of the to-be-cooled device is greater than the preset temperature, to control whether the refrigerant absorbs heat from the circulating water includes: in response to determining that the circulating water temperature of the to-be-cooled device is greater than the preset temperature, controlling the refrigerant to absorb heat from the circulating water; in response to determining that the circulating water temperature of the to-be-cooled device is equal to or less than the preset temperature, controlling the refrigerant not to absorb heat from the circulating water, and returning directly to the compressor.

Determining whether the circulating water temperature after the circulating water being heat-absorbed by the refrigerant meets the water inlet requirement of the to-be-cooled device includes: in response to determining that the circulating water temperature after heat absorption exceeds the water inlet temperature of the to-be-cooled device, continuing to control the refrigerant to absorb heat from the circulating water of the to-be-cooled device; in response to determining that the circulating water temperature after heat absorption meets the water inlet temperature of the to-be-cooled device, controlling the refrigerant to stop absorbing heat from the circulating water of the to-be-cooled device, and returning directly to the compressor.

As above, the waste heat recovery thermal management system for a vehicle according to the present application has the following beneficial effects: by controlling the circulation circuit among the heating-ventilation and air conditioning host, the compressor, the condenser, and the heat exchange device through the controller, when the condenser operates, the refrigerant in the condenser releases heat, and then the refrigerant enters the evaporator of the heating-ventilation and air conditioning host to achieve heat absorption by the refrigerant, thereby constituting a refrigeration circuit to create a refrigerated environment inside the cabin. When the condenser does not operate, a waste heat recovery circuit is formed by the heating-ventilation and air conditioning host, the compressor, the condenser, and the heat exchange device. When the refrigerant passes through the condenser, no heat exchange occurs in the condenser, when the refrigerant reaches the heating-ventilation and air conditioning host, by controlling the throttling pressure of the third electronic expansion valve through the controller, the temperature of the refrigerant in the waste heat recovery circuit is made higher than the cabin temperature by a predetermined value, thereby achieving drying of the inner wall of the heating-ventilation and air conditioning host when the refrigerant passes through the heating-ventilation and air conditioning host, so as to remove condensed water formed on the evaporator core inside the heating-ventilation and air conditioning host when the refrigeration function is turned off. Furthermore, when drying the condensed water on the evaporator core inside the heating-ventilation and air conditioning host, through the combined action of the refrigerant flowing through the heating-ventilation and air conditioning host and the blower inside the heating-ventilation and air conditioning host, moisture in the air duct and the housing of the air conditioning box can be simultaneously removed, achieving a good drying effect and preventing odor generation.

When the refrigerant reaches the heat exchange device after passing through the heating-ventilation and air conditioning host, by determining whether the waste heat of the to-be-cooled device (e.g., including battery/motor or other components in series in the vehicle's water circuit) exceeds a preset temperature, and upon determining that the waste heat of the to-be-cooled device reaches or exceeds the preset temperature, the refrigerant in the waste heat recovery circuit is controlled to recover and control the waste heat from the cooling device of the to-be-cooled device when passing through the chiller of the heat exchange device; and upon determining that the waste heat of the to-be-cooled device does not exceed the preset temperature, the refrigerant in the waste heat recovery circuit is controlled to return directly to the compressor without exchanging heat with the to-be-cooled device after passing through the chiller. Thereby, the load of the compressor is reasonably reduced, saving energy consumption during the entire drying process.

### BRIEF DESCRIPTION OF DRAWINGS

FIG. 1 is an architectural diagram of a thermal management system of the present application.
FIG. 2 is a schematic diagram illustrating the working principle when forming a refrigeration circuit according to the present application.
FIG. 3 is a schematic diagram illustrating the working principle when forming a waste heat recovery circuit according to the present application.
FIG. 4 is a flowchart of a thermal management method of the present application.

### Reference numerals:

10-air conditioning device, 101-heating-ventilation and air conditioning host, 1011- evaporator, 1012-blower, 102-compressor, 103-condenser, 20-heat exchange device, 201-chiller, 30-controller, SOV1-first solenoid valve, SOV2-second solenoid valve, EXV1-first electronic expansion valve, EXV2-second electronic expansion valve, EXV3-third electronic expansion valve.

### DETAILED DESCRIPTION

The following describes the embodiments of the present application through examples. Those skilled in the art can understand other advantages and effects of the present application from the content disclosed in this specification. The present application can be implemented or applied through other different embodiments. Various details in this specification can be modified or changed based on different viewpoints and applications without departing from the spirit of the present application. It should be noted that, in the case of no conflict, the following embodiments and features in the embodiments can be combined with each other. It should also be understood that the terms used in the embodiments of the present application are for describing implementation schemes only, and are not intended to limit the protection scope of the present application. For test methods not specified with specific conditions in the following embodiments, they are usually carried out according to conventional conditions, or according to conditions suggested by various manufacturers.

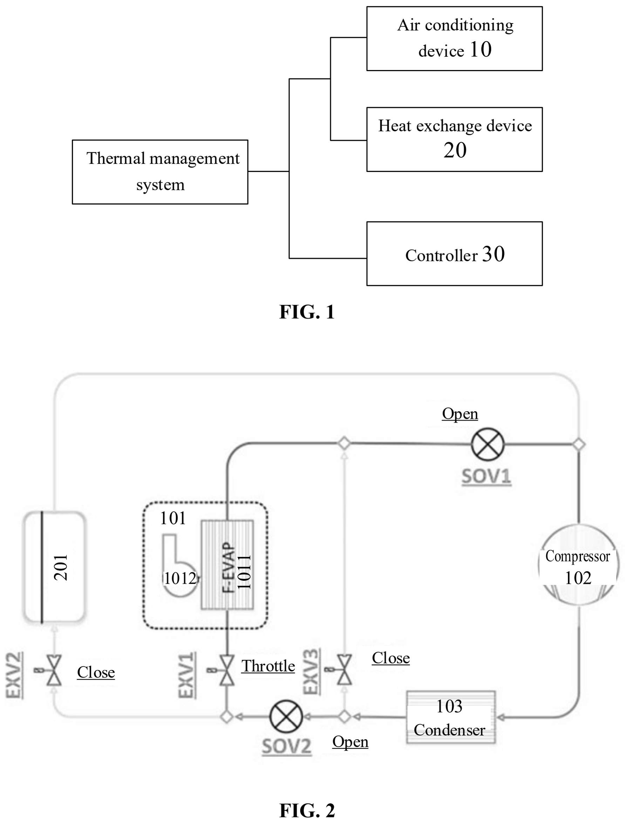

Please refer to FIG. 1 to FIG. 4. It should be noted that the structures, proportions, sizes, etc. shown in the drawings of this specification are only used to match the content disclosed in the specification, for the understanding and reading of those familiar with this technology, and are not used to limit the conditions under which the present application can be implemented. Any modifications of structures, changes in proportional relationships, or adjustments of sizes made without affecting the effects produced and the objectives achieved by the present application should still fall within the scope covered by the technical content disclosed in the present application. At the same time, terms such as "upper," "lower," "left," "right," "middle," and "a" quoted in this specification are only for the clarity of the description, and are not intended to limit the implementable scope of the present application. Changes or adjustments of their relative relationships should be considered as falling within the implementable scope of the present application without substantially changing the technical content.

Currently, in the refrigeration mode of vehicle air conditioning, when the air temperature drops below the dew point temperature, condensed water is easily precipitated from the air, adhering to the surface of the evaporator inside the heating-ventilation and air conditioning host or dripping into the air conditioning box, causing the air conditioning box to be in a humid environment for a long time, which can easily cause mildew in the air conditioning box, accompanied by a sour odor. When the refrigerant temperature is around 0°C, microorganisms in the air are frozen on the surface of the evaporator, limiting the compressor speed. After the user actively exits or other factors cause the air conditioning system to stop, the microorganisms thaw and are blown out with the air conditioning wind. The sour odor causes discomfort to the user.

Please refer to FIG. 1. The present application provides a waste heat recovery thermal management system for a vehicle, including: an air conditioning device 10 including a heating-ventilation and air conditioning (HVAC) host 101, a compressor 102, and a condenser 103 connected in sequence; and a heat exchange device 20, an end of the heat exchange device 20 being connected to a refrigerant input end of the compressor 102, and another end of the heat exchange device 20 being connected between the condenser 103 and the heating-ventilation and air conditioning host 101; where, when the condenser 103 operates, the heating-ventilation and air conditioning host 101, the compressor 102, and the condenser 103 form a refrigeration circuit; when the condenser 103 does not operate, the heating-ventilation and air conditioning host 101, the compressor 102, the condenser 103, and the heat exchange device 20 form a waste heat recovery circuit, and the refrigerant is caused to flow through the heating-ventilation and air conditioning host 101 to release heat, then flow into the heat exchange device 20 before returning to the compressor 102.

In an embodiment of the present application, during the air conditioning refrigeration process, a refrigeration circuit is formed among the heating-ventilation and air conditioning host 101, the compressor 102, and the condenser 103, and when the condenser 103 operates, refrigeration treatment for the cabin of the vehicle is achieved. The heating-ventilation and air conditioning host 101 contains an evaporator. In this stage, the evaporator is used for refrigeration and can achieve an evaporation function. After the refrigeration function of the heating-ventilation and air conditioning host 101 is stopped, condensed water adheres to the surface of the evaporator in the heating-ventilation and air conditioning host 101, by controlling the condenser 103 to stop working, the refrigerant is not processed when passing through the condenser 103. And a waste heat recovery circuit is formed among the compressor 102, the condenser 103, the heating-ventilation and air conditioning host 101, and the heat exchange device 20. When the refrigerant passes through the heating-ventilation and air conditioning host 101 to release heat, the surface of the evaporator is heated by the refrigerant, thus achieving drying of the condensed water on the surface of the evaporator of the heating-ventilation and air conditioning host 101. Furthermore, in this process, the evaporator in the heating-ventilation and air conditioning host 101 functions as a condenser when the condenser 103 is not working. Simultaneously, by determining whether there is a need for heat dissipation for the to-be-cooled device (e.g., including battery/motor or other components in series in the vehicle's water circuit), the refrigerant passing through the heat exchange device 20 is controlled whether to absorb heat from the to-be-cooled device, thereby achieving cooling treatment for the to-be-cooled device.

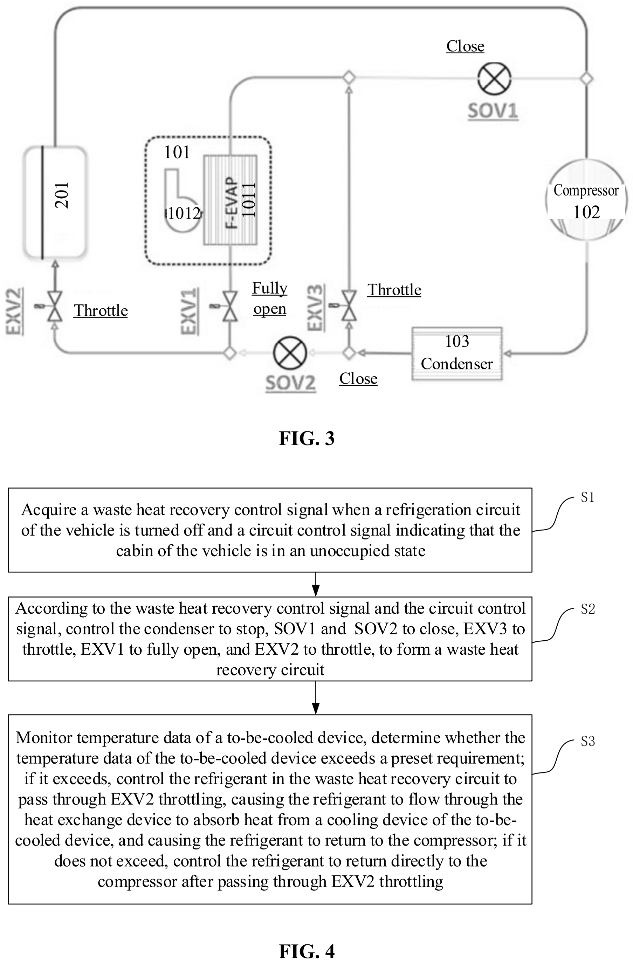

As shown in FIG. 2 and FIG. 3, a first solenoid valve SOV1 is connected between the heating-ventilation and air conditioning host 101 and the compressor 102, a first electronic expansion valve EXV1 and a second solenoid valve SOV2 are connected in sequence between the heating-ventilation and air conditioning host 101 and the condenser 103, the thermal management system further includes a third electronic expansion valve EXV3, an end of the third electronic expansion valve EXV3 is connected between the first solenoid valve SOV1 and the heating-ventilation and air conditioning host 101, and another end of the third electronic expansion valve EXV3 is connected between the condenser 103 and the second solenoid valve SOV2.

In the embodiment shown in FIG. 2, when forming the refrigeration circuit, the condenser 103 operates and performs heat dissipation treatment. By opening both the first solenoid valve SOV1 and the second solenoid valve SOV2, closing the third electronic expansion valve EXV3, and throttling the first electronic expansion valve EXV1, a refrigeration circuit is formed through the compressor 102, the condenser 103, the second solenoid valve SOV2, the first electronic expansion valve EXV1, the heating-ventilation and air conditioning host 101, and the first solenoid valve SOV1, and cold air is blown into the cabin of the vehicle through the heating-ventilation and air conditioning host 101.

In the embodiment shown in FIG. 3, when forming the waste heat recovery circuit, the condenser 103 stops working. When the refrigerant from the compressor 102 passes through the condenser 103, the refrigerant passes directly through the condenser 103 without heat exchange occurring, and enters the heating-ventilation and air conditioning host 101 through the third electronic expansion valve EXV3 throttling, then passes through the fully open first electronic expansion valve EXV1 to enter the heat exchange device 20, and then returns to the compressor 102. When the heat exchange device 20 releases heat to the refrigerant, if there is a to-be-cooled device that requires heat dissipation, the heat exchange device 20 enables the refrigerant to absorb heat from the to-be-cooled device, achieving a waste heat recovery cycle. When the to-be-cooled device does not require heat dissipation, the refrigerant returns directly to the compressor 102 without exchanging heat with the to-be-cooled device at the heat exchange device 20.

As shown in FIG. 3, the heat exchange device 20 includes: a chiller 201 and a second electronic expansion valve EXV2, where an end of the chiller 201 is connected to the refrigerant input end of the compressor 102, an end of the second electronic expansion valve EXV2 is connected to another end of the chiller 201, and another end of the second electronic expansion valve EXV2 is connected between the first electronic expansion valve EXV1 and the second solenoid valve SOV2, such that when the first solenoid valve SOV1 and the second solenoid valve SOV2 are closed, the third electronic expansion valve EXV3 is throttling, the first electronic expansion valve EXV1 is fully open, and the second electronic expansion valve EXV2 is throttling, the waste heat recovery circuit is formed, and the refrigerant flowing through the chiller 201 is caused to absorb heat released by a cooling device of the to-be-cooled device in the vehicle.

In an embodiment of the present application, during the heat exchange process of the heat exchange device 20, by the second electronic expansion valve EXV2 throttling and then passing through the chiller 201, heat absorption treatment for the to-be-cooled device can be achieved, and then the refrigerant absorbing heat is transported to the compressor 102 for circulation. For example, after the vehicle has just been driven at high speed or a certain speed, the water temperature of the battery water circulation is higher than 35°C. By opening the second electronic expansion valve EXV2 to throttle, the refrigerant flowing through the chiller 201 performs waste heat recovery on the battery water circulation, thereby achieving cooling of the battery. Moreover, the heat recovered by the refrigerant flowing through the chiller 201 can also be used for drying the condensed water on the evaporator of the heating-ventilation and air conditioning host 101 through heat release.

The heat exchange device 20 further includes: a cooling device (not shown), the cooling device including a water circulation device that releases heat to the refrigerant flowing through the chiller 201. When the to-be-cooled device (e.g., battery) in the vehicle requires heat dissipation, cooling is achieved for the corresponding cooling device (e.g., battery cooling device) of each to-be-cooled device. The water circulation device of the cooling device absorbs the heat dissipated by the to-be-cooled device in the vehicle, thereby achieving the purpose of cooling the to-be-cooled device. The heat absorbed by the water circulation device further reaches the chiller 201, and the heat of the water circulation device is absorbed by the refrigerant flowing through the chiller 201. When cooling a vehicle battery, the cooling device can be a battery cooling device.

The condenser 103 includes a water-cooled condenser or an air-cooled condenser.

In an embodiment of the present application, when performing heat dissipation treatment on the condenser 103, it can be done by air cooling or water cooling. For example, when the condenser 103 is an air-cooled condenser, the condenser fan is turned on; when the evaporator of the heating-ventilation and air conditioning host 101 stops the refrigeration function, the condenser fan is turned off at this time. For example, vehicles equipped with an Active Grille Shutter (AGS) can close the front intake, and the condenser 103 has no heat dissipation. When the condenser 103 is a water-cooled condenser, the condenser water pump is turned on or off to achieve heat dissipation control of the condenser 103. Of course, it is not limited to using both air cooling and water cooling simultaneously to cool the condenser 103 to achieve heat dissipation of the condenser 103.

The heating-ventilation and air conditioning host 101 includes: an evaporator 1011 (such as fuel evaporator, F-EVAP) and a blower 1012, where the blower 1012 is mounted corresponding to the evaporator 1011 to control the blower 1012 to blow air towards the evaporator 1011 when the waste heat recovery circuit is formed.

In an embodiment of the present application, both the evaporator 1011 and the blower 1012 have two usage forms. When the refrigeration circuit is formed, the refrigerant in the evaporator 1011 absorbs heat, and during this process, the blower 1012 blows towards the evaporator 1011, blowing cold air into the cabin to achieve cooling of the cabin. When the evaporator 1011 stops refrigeration and has condensed water, the blower 1012 acts on the evaporator 1011 by blowing air, and cooperates with the heat release of the refrigerant to achieve thorough drying of the condensed water formed on the tube wall of the evaporator 1011.

When the waste heat recovery circuit is formed, the blower 1012 blows air towards the evaporator 1011 for drying when the temperature of the refrigerant flowing through the heating-ventilation and air conditioning host 101 is 10-20°C higher than the temperature inside the cabin of the vehicle.

In an embodiment of the present application, when the heating-ventilation and air conditioning host 101 functions as a condenser and the refrigerant passes through the condenser 103 corresponding to the heat dissipation component, the heat dissipation component is in a stopped working state. Therefore, the condenser 103 corresponding to the heat dissipation component has no heat exchange. Then, the refrigerant is throttled by the third electronic expansion valve EXV3, the pressure of the refrigerant entering the evaporator of the heating-ventilation and air conditioning host 101 is controlled, such that the saturation temperature corresponding to the evaporator under this pressure is 10-20°C higher than the cabin temperature. This creates a temperature difference between the refrigerant at the heating-ventilation and air conditioning host 101 and the temperature inside the cabin of the vehicle, thereby achieving the condition for the refrigerant to release heat at the heating-ventilation and air conditioning host 101, and thus drying the condensed water on the inner wall of the heating-ventilation and air conditioning host 101.

The thermal management system of the present application further includes a controller 30. The controller 30 is electrically connected to the first solenoid valve SOV1, the second solenoid valve SOV2, the first electronic expansion valve EXV1, the second electronic expansion valve EXV2, the third electronic expansion valve EXV3, and the heat exchange device 20, respectively, to control the first solenoid valve SOV1 and the second solenoid valve SOV2 to open, control the second electronic expansion valve EXV2 and the third electronic expansion valve EXV3 to close, and control the first electronic expansion valve EXV1 to throttle when the refrigeration circuit is formed; and to control the first solenoid valve SOV1 and the second solenoid valve SOV2 to close, control the third electronic expansion valve EXV3 to throttle, control the first electronic expansion valve EXV1 to fully open, and control the second electronic expansion valve EXV2 to throttle when the waste heat recovery circuit is formed.

In an embodiment of the present application, through the controller 30, the control of the first solenoid valve SOV1, the second solenoid valve SOV2, the first electronic expansion valve EXV1, the second electronic expansion valve EXV2, the third electronic expansion valve EXV3, and the heat exchange device 20 is achieved, respectively. Thus, when it is necessary to form the refrigeration circuit, by controlling the condenser 103 to work while controlling the first solenoid valve SOV1 and the second solenoid valve SOV2 to open, the second electronic expansion valve EXV2 and the third electronic expansion valve EXV3 to close, and the first electronic expansion valve EXV1 to throttle, the refrigeration circuit is formed. After the refrigeration function is turned off, by controlling the condenser 103 to stop, and under the premise that the condenser 103 does not perform any exchange on the refrigerant, by controlling the first solenoid valve SOV1 and the second solenoid valve SOV2 to close, the third electronic expansion valve EXV3 to throttle, the first electronic expansion valve EXV1 to fully open, and the second electronic expansion valve EXV2 to throttle, the waste heat recovery circuit is formed, and it is determined whether heat dissipation treatment is needed for the to-be-cooled device in the vehicle, to determine whether to absorb heat from the cooling device of the to-be-cooled device in the vehicle by controlling the second electronic expansion valve EXV2 to throttle when the refrigerant passes through the chiller 201.

The controller 30 includes: a cabin signal acquisition unit, a heat dissipation control unit, and a circuit control unit; where the cabin signal acquisition unit is configured to acquire a circuit control signal indicating that the cabin of the vehicle is in an unoccupied state; the heat dissipation control unit is configured to control the condenser 103 to stop heat dissipation upon acquiring the circuit control signal; the circuit control unit is configured to control switching between the refrigeration circuit and the waste heat recovery circuit.

In an embodiment of the present application, during the process of controlling the switching between the refrigeration circuit and the waste heat recovery circuit by the controller 30, after the vehicle refrigeration circuit is closed, the cabin signal acquisition unit acquires the circuit control signal indicating that the cabin is in an unoccupied state. For example, by using a gravity sensor to detect whether there is corresponding sitting weight on the seat in the cabin, etc.; the heat dissipation control unit causes the condenser 103 to stop heat exchange with the refrigerant upon acquiring the circuit control signal; and the circuit control unit switches the refrigeration circuit to the waste heat recovery circuit; and the circuit control unit determines whether heat dissipation is needed for the to-be-cooled device, to determine whether the refrigerant absorbs the waste heat of the to-be-cooled device when the refrigerant passing through the chiller 201.

The circuit control unit includes: a temperature monitor and a pressure controller; where the temperature monitor acquires a temperature control signal indicating that a temperature difference between the temperature of the refrigerant about to enter the heating-ventilation and air conditioning host 101 and the temperature inside the cabin has not reached a predetermined temperature difference; the pressure controller controls the throttling pressure of the third electronic expansion valve EXV3 on the refrigerant according to the temperature control signal until the temperature difference reaches the predetermined temperature difference.

In an embodiment of the present application, after the circuit control unit switches the refrigeration circuit to the waste heat recovery circuit, by monitoring the temperature of the refrigerant entering the heating-ventilation and air conditioning host 101 and simultaneously monitoring the temperature inside the cabin, the temperature difference between the two is obtained. When the temperature difference has not reached the predetermined temperature difference, a corresponding temperature control signal is acquired to control the throttling pressure of the third electronic expansion valve EXV3 through the pressure controller, to adjust the temperature of the refrigerant flowing through the heating-ventilation and air conditioning host 101, such that the temperature difference between the temperature of the refrigerant flowing through the heating-ventilation and air conditioning host 101 and the temperature inside the cabin of the vehicle reaches the predetermined temperature difference.

The range of the predetermined temperature difference is 10-20°C. That is, it is necessary to control the throttling pressure of the third electronic expansion valve EXV3, such that the temperature difference between the temperature of the refrigerant flowing through the heating-ventilation and air conditioning host 101 and the temperature inside the cabin of the vehicle is adjusted to 10-20°C, allowing the refrigerant to release heat to the inner wall of the heating-ventilation and air conditioning host 101, thereby achieving drying of the inner wall of the heating-ventilation and air conditioning host 101.

As shown in FIG. 4, the present application also provides a thermal management method, including steps S1 to S3.

At step S1: a waste heat recovery control signal when the refrigeration circuit of the vehicle is closed and a circuit control signal indicating that the cabin of the vehicle is in an unoccupied state are acquired. The waste heat recovery control signal is generated by the controller 30 of the thermal management system.

At step S2: according to the waste heat recovery control signal and the circuit control signal, the condenser 103 is controlled to stop, the first solenoid valve SOV1 and the second solenoid valve SOV2 are controlled to close, the third electronic expansion valve EXV3 is controlled to throttle, the first electronic expansion valve EXV1 is controlled to fully open, and the second electronic expansion valve EXV2 is controlled to throttle, to form a waste heat recovery circuit.

At step S3: temperature data of a to-be-cooled device is monitored, whether the temperature data of the to-be-cooled device exceeds a preset requirement is determined; if it exceeds, the refrigerant in the waste heat recovery circuit is controlled to pass through the second electronic expansion valve EXV2 throttling, causing the refrigerant to flow through the heat exchange device 20 to absorb heat from a cooling device of the to-be-cooled device, and causing the refrigerant to return to the compressor 102; if it does not exceed, then the refrigerant is controlled to return directly to the compressor 102 after passing through the second electronic expansion valve EXV2 throttling.

In an embodiment of the present application, during waste heat recovery, when refrigeration inside the cabin of the vehicle is stopped, the waste heat recovery control signal when the air conditioning stops refrigeration is acquired, as well as the circuit control signal indicating that the cabin of the vehicle is in an unoccupied state. This circuit control signal in the unoccupied state can be obtained by acquiring the induction signal of a gravity sensor on the seat in the cabin. Through the waste heat recovery control signal and the circuit control signal, the condenser 103 is controlled to stop, such that the refrigerant does not to perform heat exchange when passing through the condenser 103, and the first solenoid valve SOV1 and the second solenoid valve SOV2 are controlled to close, the third electronic expansion valve EXV3 is controlled to throttle, the first electronic expansion valve EXV1 is controlled to fully open, and the second electronic expansion valve EXV2 is controlled to throttle, to form a waste heat recovery circuit. In this process, the evaporator of the heating-ventilation and air conditioning host 101 switches from an evaporation function to a condensation function and releases heat to the inner wall of the heating-ventilation and air conditioning host 101, thereby achieving drying treatment of the condensed water on the inner wall of the heating-ventilation and air conditioning host 101. After the refrigerant releases heat through the heating-ventilation and air conditioning host 101, by controlling the second electronic expansion valve EXV2 to throttle, and determining that the temperature of the to-be-cooled device (e.g., including battery/motor or other components in series in the vehicle's water circuit) is higher than the preset requirement (e.g., after the vehicle has just been driven at high speed or a certain speed, the battery water temperature is higher than 35°C or a certain value), by the second electronic expansion valve EXV2 throttling, the refrigerant is controlled to absorb heat from the cooling device of the to-be-cooled device when passing through the chiller 201, thereby achieving cooling treatment for the to-be-cooled device, and the refrigerant continues to return to the compressor 102 after absorbing heat from the cooling device of the to-be-cooled device. When it is monitored that the temperature of the to-be-cooled device does not exceed the preset requirement, by the second electronic expansion valve EXV2 throttling, the refrigerant is controlled to return directly to the compressor 102 without absorbing heat from the cooling device of the to-be-cooled device when passing through the chiller 201.

In step S3, determining whether the temperature data of the to-be-cooled device exceeds the preset requirement includes: determining whether the circulating water temperature of the to-be-cooled device is greater than a preset temperature, to control whether the refrigerant in the waste heat recovery circuit absorbs heat from the circulating water; and determining whether the temperature of the circulating water after being heat-absorbed by the refrigerant meets the water inlet requirement of the to-be-cooled device. When determining that the circulating water temperature is greater than the preset temperature, it is necessary to control the refrigerant to absorb heat from the circulating water of the to-be-cooled device, and it is also necessary to determine whether the circulating water temperature after being heat-absorbed by the refrigerant meets the water inlet requirement of the to-be-cooled device (e.g., the water inlet temperature requiring continued cooling). If it is determined that the circulating water temperature after heat absorption does not meet the water inlet temperature of the to-be-cooled device, it is necessary to continue to control the refrigerant to absorb heat from the circulating water of the to-be-cooled device; if it is determined that the circulating water temperature after heat absorption meets the water inlet temperature of the to-be-cooled device, the refrigerant is controlled to stop absorbing heat from the circulating water of the to-be-cooled device.

In summary, in the present application, the controller 30 controls the circulation circuit among the heating-ventilation and air conditioning host 101, the compressor 102, the condenser 103, and the heat exchange device 20, to achieve that when the condenser 103 operates, the refrigerant in the condenser 103 releases heat, and then the refrigerant enters the evaporator of the heating-ventilation and air conditioning host 101 to achieve heat absorption by the refrigerant, thereby constituting a refrigeration circuit to create a refrigerated environment inside the cabin. When the condenser 103 does not operate, a waste heat recovery circuit is formed by the heating-ventilation and air conditioning host 101, the compressor 102, the condenser 103, and the heat exchange device 20. When the refrigerant passes through the condenser 103, no heat exchange occurs in the condenser 103, when the refrigerant reaches the heating-ventilation and air conditioning host 101, by controlling the throttling pressure of the third electronic expansion valve EXV3, the temperature of the refrigerant in the waste heat recovery circuit is made higher than the cabin temperature by a predetermined value, thereby achieving drying of the inner wall of the heating-ventilation and air conditioning host 101 when the refrigerant passes through the heating-ventilation and air conditioning host 101, so as to remove condensed water formed on the evaporator core inside the heating-ventilation and air conditioning host 101 when the refrigeration function is closed. Furthermore, when drying the condensed water on the evaporator core inside the heating-ventilation and air conditioning host 101, through the combined action of the refrigerant flowing through the heating-ventilation and air conditioning host 101 and the blower 1012 inside the heating-ventilation and air conditioning host 101, moisture in the air duct and the housing of the air conditioning box can be simultaneously removed, achieving a good drying effect and preventing odor generation.

When the refrigerant reaches the heat exchange device 20 after passing through the heating-ventilation and air conditioning host 101, by determining whether the waste heat of the to-be-cooled device (e.g., including battery/motor or other components in series in the vehicle's water circuit) exceeds a preset temperature, and upon determining that the waste heat of the to-be-cooled device reaches or exceeds the preset temperature, the refrigerant in the waste heat recovery circuit is controlled to recover and control the waste heat from the cooling device of the to-be-cooled device when passing through the chiller 201 of the heat exchange device 20; and upon determining that the waste heat of the to-be-cooled device does not exceed the preset temperature, the refrigerant in the waste heat recovery circuit is controlled to return directly to the compressor 102 without exchanging heat with the to-be-cooled device after passing through the chiller 201. Thereby, the load of the compressor 102 is reasonably reduced, saving energy consumption during the entire drying process.

The above embodiments are only used to illustrate the principles and effects of the present application, and are not intended to limit the present application. Any person skilled in the art can modify or change the above embodiments without departing from the spirit and scope of the present application. Therefore, all equivalent modifications or changes made by those of ordinary skill in the art without departing from the spirit and technical ideas disclosed in the present application should still be covered by the claims of the present application.

## Claims

1. A thermal management system for a vehicle, comprising:
an air conditioning device (10), the air conditioning device comprising a heating-ventilation and air conditioning host (101), a compressor (102), and a condenser (103) connected in sequence; and
a heat exchange device (20), an end of the heat exchange device being connected to a refrigerant input end of the compressor (102), and another end of the heat exchange device being connected between the condenser (103) and the heating-ventilation and air conditioning host (101);
wherein when the condenser (103) operates, the heating-ventilation and air conditioning host (101), the compressor (102), and the condenser (103) form a refrigeration circuit; and
when the condenser (103) does not operate, the heating-ventilation and air conditioning host (101), the compressor (102), the condenser (103), and the heat exchange device (20) form a waste heat recovery circuit, and refrigerant is caused to flow through the heating-ventilation and air conditioning host (101) to release heat, then flow into the heat exchange device (20) before returning to the compressor (102).

2. The thermal management system according to claim 1, wherein
a first solenoid valve (SOV1) is connected between the heating-ventilation and air conditioning host (101) and the compressor (102),
a first electronic expansion valve (EXV1) and a second solenoid valve (SOV2) are connected in sequence between the heating-ventilation and air conditioning host (101) and the condenser (103), and
an end of a third electronic expansion valve (EXV3) is connected between the heating-ventilation and air conditioning host and the first solenoid valve (SOV1), and another end of the third electronic expansion valve (EXV3) is connected between the condenser (103) and the second solenoid valve (SOV2).

3. The thermal management system according to claim 2, wherein the heat exchange device (20) comprises:
a chiller (201), an end of the chiller (201) being connected to the refrigerant input end of the compressor (102); and
a second electronic expansion valve (EXV2), an end of the second electronic expansion valve (EXV2) being connected to another end of the chiller (201), and another end of the second electronic expansion valve (EXV2) being connected between the first electronic expansion valve (EXV1) and the second solenoid valve (SOV2),
wherein when the first solenoid valve (SOV1) and the second solenoid valve (SOV2) are closed, the third electronic expansion valve (EXV3) is throttling, the first electronic expansion valve (EXV1) is fully open, and the second electronic expansion valve (EXV2) is throttling, the waste heat recovery circuit is formed, and the refrigerant is caused to absorb heat through the chiller (201).

4. The thermal management system according to claim 3, further comprising a controller (30) being electrically connected to the first solenoid valve (SOV1), the second solenoid valve (SOV2), the first electronic expansion valve (EXV1), the second electronic expansion valve (EXV2), the third electronic expansion valve (EXV3), and the heat exchange device, respectively, and configured to:
when the refrigeration circuit is formed, control the first solenoid valve (SOV1) and the second solenoid valve (SOV2) to open, control the second electronic expansion valve (EXV2) and the third electronic expansion valve (EXV3) to close, and control the first electronic expansion valve (EXV1) to throttle; and
when the waste heat recovery circuit is formed, control the first solenoid valve (SOV1) and the second solenoid valve (SOV2) to close, control the third electronic expansion valve (EXV3) to throttle, control the first electronic expansion valve (EXV1) to fully open, and control the second electronic expansion valve (EXV2) to throttle.

5. The thermal management system according to claim 4, wherein the controller (30) comprises:
a cabin signal acquisition unit, configured to acquire a circuit control signal indicating that a cabin of the vehicle is in an unoccupied state;
a heat dissipation control unit, configured to control the condenser (103) to stop heat dissipation upon acquiring the circuit control signal; and
a circuit control unit, configured to control switching between the refrigeration circuit and the waste heat recovery circuit.

6. The thermal management system according to claim 5, wherein the circuit control unit comprises:
a temperature monitor, configured to acquire a temperature control signal indicating that a temperature difference between a temperature of the refrigerant about to enter the heating-ventilation and air conditioning host (101) and a temperature inside the cabin of the vehicle has not reached a predetermined temperature difference; and
a pressure controller, configured to control a throttling pressure of the third electronic expansion valve (EXV3) on the refrigerant according to the temperature control signal until the temperature difference reaches the predetermined temperature difference.

7. The thermal management system according to claim 6, wherein a range of the predetermined temperature difference is 10-20°C.

8. The thermal management system according to any one of claims 1 to 7, wherein the condenser (103) comprises a water-cooled condenser or an air-cooled condenser.

9. The thermal management system according to any one of claims 1 to 8, wherein the heating-ventilation and air conditioning host (101) comprises an evaporator (1011) and a blower,
wherein the blower (1012) is mounted corresponding to the evaporator (1011) to control the blower (1012) to blow air towards the evaporator (1011) when the waste heat recovery circuit is formed.

10. The thermal management system according to claim 9, wherein when the waste heat recovery circuit is formed, the blower (1012) blows air towards the evaporator (1011) for drying when a temperature of the refrigerant flowing through the heating-ventilation and air conditioning host (101) is 10-20°C higher than a temperature inside a cabin of the vehicle.

11. A thermal management method for a vehicle, applied to the thermal management system according to any one of claims 1-10, the method comprising:
(S1) acquiring a waste heat recovery control signal when the refrigeration circuit of the vehicle is closed and a circuit control signal indicates that a cabin of the vehicle is in an unoccupied state;
(S2) according to the waste heat recovery control signal and the circuit control signal, controlling a condenser (103) in the thermal management system to stop, controlling a first solenoid valve (SOV1) and a second solenoid valve (SOV2) in the thermal management system to close, controlling a third electronic expansion valve (EXV3) to throttle, controlling a first electronic expansion valve (EXV1) to fully open, and controlling a second electronic expansion valve (EXV2) to throttle, to form a waste heat recovery circuit;
(S3) monitoring temperature data of a to-be-cooled device, determining whether the temperature data of the to-be-cooled device exceeds a preset requirement,
in response to the temperature data of the to-be-cooled device exceeding the preset requirement, controlling the refrigerant in the waste heat recovery circuit to pass through the second electronic expansion valve (EXV2) throttling, causing the refrigerant flowing through the heat exchange device (20) to absorb heat from a cooling device of the to-be-cooled device, and causing the refrigerant to return to the compressor (102), and
in response to the temperature data of the to-be-cooled device not exceeding the preset requirement, controlling the refrigerant to return directly to the compressor (102) after passing through the second electronic expansion valve (EXV2) throttling.

12. The method according to claim 11, wherein determining whether the temperature data of the to-be-cooled device exceeds the preset requirement comprises:
determining whether a circulating water temperature of the to-be-cooled device is greater than a preset temperature, to control whether the refrigerant absorbs heat from a circulating water, and
determining whether the circulating water temperature after the circulating water being heat-absorbed by the refrigerant meets a water inlet requirement of the to-be-cooled device.

13. The method according to claim 12, wherein determining whether the circulating water temperature of the to-be-cooled device is greater than the preset temperature, to control whether the refrigerant absorbs heat from the circulating water comprises:
in response to determining that the circulating water temperature of the to-be-cooled device is greater than the preset temperature, controlling the refrigerant to absorb heat from the circulating water; and
in response to determining that the circulating water temperature of the to-be-cooled device is equal to or less than the preset temperature, controlling the refrigerant not to absorb heat from the circulating water, and return directly to the compressor (102).

14. The method according to claim 12 or 13, wherein determining whether the circulating water temperature after the circulating water being heat-absorbed by the refrigerant meets the water inlet requirement of the to-be-cooled device comprises:
in response to determining that the circulating water temperature after heat absorption exceeds a water inlet temperature of the to-be-cooled device, continuing to control the refrigerant to absorb heat from the circulating water of the to-be-cooled device; and
in response to determining that the circulating water temperature after heat absorption meets the water inlet temperature of the to-be-cooled device, controlling the refrigerant to stop absorbing heat from the circulating water of the to-be-cooled device, and return directly to the compressor (102).
